# EUROPEAN PATENT APPLICATION

(11) **EP 4 818 883 A2**
(43) Date of publication of application: **07.10.2026**
(21) Application number: 26188127.0
(22) Date of filing: 22.12.2021
(51) Int. Cl.: G06F 7/544

(54) **IN-MEMORY PROCESSING BASED ON MULTIPLE WEIGHT SETS**

(62) Document number(s) of the earlier application(s) in accordance with Art. 76 EPC: 21844701.9 / 4 457 608
(71) Applicant: Axelera AI BV, 5656 AE Eindhoven (NL)
(72) Inventor: Eleftheriou, Evangelos, 5656 AE Eindhoven (NL); Khaddam-Aljameh, Riduan, 5656 AE Eindhoven (NL); Papistas, Ioannis, 5656 AE Eindhoven (NL); Katselas, Leonidas, 5656 AE Eindhoven (NL); Hager, Pascal, 5656 AE Eindhoven (NL); Rooseleer, Bram, 5656 AE Eindhoven (NL); Moons, Bert, 5656 AE Eindhoven (NL); Cosemans, Stefan, 5656 AE Eindhoven (NL); Uytterhoeven, Roel, 5656 AE Eindhoven (NL); Garcea, Giuseppe, 5656 AE Eindhoven (NL); Poliakov, Dmitri, 5656 AE Eindhoven (NL); Yi, Lu, 5656 AE Eindhoven (NL); Van Loon, Jeroen, 5656 AE Eindhoven (NL); Machiels, Brecht, 5656 AE Eindhoven (NL)
(74) Representative: E. Blum & Co. AG

(57) **Abstract**

The invention is notably directed to a method of in-memory processing, the aim of which is to perform matrix-vector calculations. The method relies on a device having a crossbar array structure (15). The latter includes *N* input lines (152) and *M* output lines (153), which are interconnected at cross-points defining *N* × *M* cells (155), where *N* ≥ 2 and *M* ≥ 2. The cells include respective memory systems, each designed to store *K* weights *W_{i,j,k},* where *K* ≥ 2. Thus, the crossbar array structure includes *N* × *M* memory systems, which are capable of storing *K* sets of *N* × *M* weights. In order to perform multiply-accumulate (MAC) operations, the method first enables *N* × *M* active weights for the *N* × *M* cells by selecting, for each of the memory systems, a weight from its *K* weights and setting the selected weight as an active weight. Next, signals encoding a vector of *N* components are applied to the *N* input lines of the crossbar array structure. This causes the latter to perform MAC operations based on the vector and the *N* × *M* active weights. Eventually, output signals obtained in output of the *M* output lines are read out to obtain corresponding values. This allows distinct sets of weights to be locally enabled at the crossbar array, which makes it possible to locally perform rotations of the weights and accordingly reduce the frequency of data exchanges with a memory unit. This, in turn, reduces idle times of the crossbar array structure. Thus, the proposed approach makes it possible to substantially reduce the frequency of data transfers, which results in speeding up computations. Plus, the weights may possibly be prefetched, while performing MAC operations in accordance with the currently active weights. Of particular advantage is that the prefetching steps are at least partly hidden through pipelining. The invention is further directed to related devices, systems, and computer program products.

## Description

### BACKGROUND

The invention relates in general to the field of in-memory processing techniques (i.e., methods, devices, and systems) and related acceleration techniques. In particular, it relates to in-memory processing devices involving crossbar array structures for performing matrix-vector-multiplications with in-memory sequential partial product accumulation and coefficient prefetching.

Matrix-vector multiplications are frequently needed in a number of applications, such as technical computing and cognitive tasks. Examples of such cognitive tasks are the training of, and inferences performed with, cognitive models, such as neural networks for computer vision and natural language processing, and other machine learning models, such as used for weather forecasting and financial predictions.

Such operations pose multiple challenges, because of their recurrence, universality, and size and memory requirements. On the one hand, there is a need to accelerate these operations, notably in high-performance computing applications. On the other hand, there is a need to achieve an energy-efficient way of performing them.

Traditional computer architectures are based on the von Neumann computing concept, where processing capability and data storage are split into separate physical units. Such architectures suffer from congestion and high-power consumption, as data has to be continuously transferred from the memory units to the control and arithmetic units through physically constrained and costly interfaces.

One possibility to accelerate matrix-vector multiplications is to use dedicated hardware acceleration devices, such as a dedicated circuit having a crossbar array configuration. This circuit includes input lines and output lines, which are interconnected at cross-points defining cells. The cells contain respective memory devices, which are designed to store respective matrix coefficients. Vectors are encoded as signals applied to the input lines of the crossbar array, to cause the latter to perform multiply-accumulate (MAC) operations. There are several possible implementations. For example, the coefficients of the matrix (<weights=) can be stored in columns of cells. Next to every column of cells is a column of arithmetic units that can multiply the weights with input vector values (creating partial products) and finally accumulate all partial products to produce the outcome of a full dot-product. Such an architecture can simply and efficiently map a matrix-vector multiplication. The weights can be updated by reprogramming the memory elements, as needed to perform matrix-vector multiplications. Such a solution breaks the <memory wall= as it fuses the arithmetic- and memory unit into a single in-memory-computing (IMC) unit, whereby processing is done much more efficiently in or near the memory.

Devices having such a crossbar array structure are routinely used. Now, the present inventors set themselves the challenge of improving such devices, notably to make them more energy-efficient and computationally faster.

### SUMMARY

According to a first aspect, the present invention is embodied as a method of in-memory processing, the aim of which is to perform matrix-vector calculations. The method relies on a device having a crossbar array structure. The latter includes *N* input lines and *M* output lines, which are interconnected at cross-points defining *N* × *M* cells, where *N* g 2 and *M* g 2. The cells include respective memory systems, each designed to store *K* weights, *K* g 2. Thus, the crossbar array structure includes *N* × *M* memory systems, which are capable of storing *K* sets of *N* × *M* weights. In order to perform multiply-accumulate (MAC) operations, the method first enables *N* × *M* active weights for the *N* × *M* cells by selecting, for each of the memory systems, a weight from its *K* weights and setting the selected weight as an active weight. Next, signals encoding a vector of *N* components are applied to the *N* input lines of the crossbar array structure. This causes the latter to perform MAC operations based on the vector and the *N* × *M* active weights. Eventually, output signals obtained in output of the *M* output lines are read out to obtain corresponding values.

The above scheme allows distinct sets of weights to be locally enabled at the crossbar array, which makes it possible to switch between active weights locally and accordingly reduce the frequency of data exchanges with a memory unit. This, in turn, reduces idle times of the core compute device, i.e., the crossbar array structure. That is, some intermediate weight updates can be avoided, because up to *K* successive computation cycles can be performed without the need to transfer new sets of weights. Instead, the relevant weight sets can be locally enabled as active weights at each calculation cycle. In addition, partial results can be locally accumulated, to avoid transferring intermediate results. Thus, the proposed approach makes it possible to substantially reduce the frequency of data transfers, which results in speeding up computations and reducing the power consumption needed to perform matrix-vector calculations.

In particularly advantageous embodiments, the method further comprises prefetching weights, while performing MAC operations in accordance with *N* × *M* weights that are currently enabled as active weights. That is, *q* sets of *N* × *M* weights (i.e., weights to be used next) are prefetched and stored in the *N* × *M* memory systems, in place of *q* sets of *N* × *M* weights that were previously active, where 1 ≤ *q* ≤ *K* - 1. In other words, the weights can be proactively loaded (i.e., prefetched during a given compute cycle), if necessary, to further reduce idle times of the crossbar structure. Of particular advantage is that the prefetching steps are at least partly hidden through pipelining.

Preferably, the *N* × *M* active weights are enabled by concomitantly selecting the *k*^{th} weight of the *K* weights of each memory system of at least a subset of the *N* × *M* memory systems and setting each weight accordingly selected as a currently active weight, where 1 ≤ *k* ≤ *K*. As a result, the array structure can change context almost instantaneously.

In typical embodiments, several matrix-vector calculation cycles are successively performed. Each cycle comprises operations as recited above. I.e., first a new set of *N* × *M* active weights is enabled for the *N* × *M* cells by selecting, for each of the memory systems, a weight from its *K* weights and setting the selected weight as an active weight. Next, signals encoding a vector of *N* components are applied to the *N* input lines of the crossbar array structure to cause the latter to perform MAC operations, based on the current vector and the new set of *N* × *M* active weights. Eventually, output signals obtained in output of the *M* output lines are read out to obtain corresponding values. Up to *K* such cycles can be performed without the need to transfer new weights to the memory systems of the array.

Preferably, each of the cycles further comprises accumulating partial product results corresponding to the output signals read out, whereby accumulations are successively performed. Upon completing the several matrix-vector calculation cycles, the method may for instance return results obtained based on the successive accumulations to an external memory unit (i.e., external to the array). Thus, there is no need to transfer intermediate results.

If necessary, new weights may be prefetched, prior to completing *K* cycles of the several matrix-vector calculation cycles. That is, the method may prefetch *q* sets of *N* × *M* weights and store the latter in the *N* × *M* memory systems, in place of *q* sets of *N* × *M* previously enabled as active weights, where 1 ≤ *q* ≤ *K* - 1. Interestingly, because new weight values may possibly be prefetched in-between, further matrix-vector calculation cycles can be performed (beyond the *K* cycles), uninterruptedly, while keeping on accumulating partial results. Again, the prefetching steps are hidden through pipelining. The final results can be returned at the very end of the whole matrix-vector calculations, without suffering from idle times due to intermediate data transfer.

Large operands may for instance be handled by decomposing the required operations into *K* × *T* matrix-vector calculations. That is, the method may perform *K* × *T* matrix-vector calculation cycles, where *T* corresponds to a number of input vectors. Each input vector is decomposed into *K* sub-vectors of *N* components and is associated with *K* respective block matrices, the latter corresponding to *K* sets of *N* × *M* weights. Note, the sub-vectors actually correspond to the vectors introduced above; each sub-vector is a portion of an input vector. In that case, *K* × *T* matrix-vector calculation cycles are performed as follows. To start with, *K* sets of *N* × *M* weights are loaded. The *K* sets of *N* × *M* weights correspond to the *K* block matrices. The memory systems are accordingly programmed to store the *K* sets of *N* × *M* weights. Next, several operations are performed and, this, for each of the *K* sub-vectors of each of the *T* input vectors. First, *N* × *M* weights are enabled (as currently active weights), which are the weights corresponding to one of the *K* respective block matrices, i.e., the block matrix associated to the current sub-vector. Second, signals encoding a vector corresponding to each sub-vector are applied to the *N* input lines, which causes the crossbar array structure to perform MAC operations based on each sub-vector and the currently active weights. Third, the method reads out output signals as obtained in output of the *M* output lines to obtain corresponding partial values.

The readout preferably comprises accumulating the partial values obtained for each sub-vector with partial values as previously obtained for a previous one of the *K* sub-vectors, if any, to obtain updated results. Eventually, the method returns results obtained based on the updated results obtained last.

In embodiments, an external processing unit (i.e., external to the array) is used to map a given problem onto a given number of sub-vectors and a set of *K* sets of *N* × *M* weights, prior to programming the *N* × *M* memory systems in accordance with the *K* sets of *N* × *M* weights and encoding the sub-vectors into input signals, with a view to subsequently applying such input signals to the *N* input lines to perform the several matrix-vector calculation cycles. Note, the external processing unit may possibly be co-integrated with the crossbar array structure. In variants, it forms part of a separate device or machine.

The *N* × *M* memory systems may either be digital or analogue memory systems. In either case, the MAC operations may be performed in parallel or as bit-serial operations.

In embodiments where the *N* × *M* memory systems are digital memory systems, each of the *N* × *M* cells further comprises an arithmetic unit connected to a respective one of the *N* × *M* memory systems.

For example, the MAC operations may be performed bit-serially in *P* cycles, *P* g 2, wherein *P* corresponds to a bit width of each of the *N* components of each of the vectors (or sub-vectors) used in input. In that case, partial product values are obtained, which are locally accumulated (at the crossbar array) upon completing each of the *P* cycles. This accumulation, however, should be distinguished from the accumulation performed upon completing vector-level operations, i.e., operations relevant to vectors (or sub-vectors), when successively processing several vectors (or sub-vectors).

According to another aspect, the invention is embodied as a computer program for in-memory processing. The computer program product comprises a computer readable storage medium having program instructions embodied therewith. The program instructions are executable by processing means of an in-memory processing hardware device to cause the latter to perform the steps of any of the methods described above.

According to a further aspect, the invention is embodied as an in-memory processing hardware device. Consistently with the present methods, the device comprises a crossbar array structure including *N* input lines and *M* output lines, which are interconnected at cross-points defining *N* × *M* cells, where *N* g 2 and *M* g 2. The cells include respective memory systems, each designed to store *K* weights, where *K* g 2. That is, the crossbar array structure includes *N* × *M* memory systems, which, as a whole, are adapted to store *K* sets of *N* × *M* weights to perform MAC operations. The device further includes a selection circuit connected to the *N* × *M* memory systems. The selection circuit is configured to select a weight from the *K* weights of each of the memory systems and set the selected weight as an active weight, so as to enable *N* × *M* active weights for the *N* × *M* cells. The device additionally includes an input unit, which is configured to apply signals encoding a vector of *N* components to the *N* input lines of the crossbar array structure to cause the latter to perform MAC operations based on this vector and the *N* × *M* active weights, as enabled by the selection circuit, in operation. The device further includes a readout unit, which is configured to read out output signals obtained in output of the *M* output lines.

In embodiments, each of the *N* × *M* memory systems is designed so that its *K* weights are independently programmable. The device may further include a programming circuit that is connected to each memory system. The programming circuit is configured to program the *K* weights of the *N* × *M* memory systems. The programming circuit may advantageously be configured to prefetch *q* sets of *N* × *M* weights that are not currently set as active weights, and accordingly program the *N* × *M* memory systems, for the latter to store the prefetched weights in place of *q* sets of *N* × *M* weights, where 1 ≤ *q* ≤ *K* - 1.

In preferred embodiments, each of the *N* × *M* memory systems includes *K* memory elements, each adapted to store a respective weight of the *K* weights, and the selection circuit includes *N* × *M* multiplexers, each connected to each of the *K* memory elements of a respective one of the *N* × *M* memory systems, as well as selection control lines, which are connected to each of the multiplexers, so as to allow any one of the *K* weights of each of the memory systems to be selected and set as an active weight, in operation.

Preferably, the selection circuit is further configured to select a subset of *n* × *m* weights from one of the *K* sets of *N* × *M* weights, by concomitantly selecting the *k*^{th} weight of the *K* weights of each memory system of a subset of *n* × *m* memory systems of the *N* × *M* memory systems, where 2 ≤ *n* ≤ *N*, 2 ≤ *m* ≤ *M*, and 1 ≤ *k* ≤ *K*.

In embodiments, the in-memory processing hardware device further comprises a sequencer circuit and an accumulator circuit. The sequencer circuit is connected to the input unit and the selection circuit to orchestrate operations of the input unit and the selection circuit, so as to successively perform several cycles of matrix-vector calculations based on one or more sets of vectors. In operation, each of the cycles of matrix-vector calculations involves one or more cycles of MAC operations. A distinct set of *N* × *M* weights are selected from the *K* sets of *N* × *M* weights and set as *N* × *M* active weights at each of the cycles of matrix-vector calculations. The accumulator circuit is configured to accumulate partial product values obtained upon completing each MAC operation cycle. Preferably, the accumulator circuit is arranged at the output of the output lines.

In preferred embodiments, each of the *N* × *M* memory systems includes *K* memory elements, each adapted to store a respective weight of the *K* weights. Each of the *K* memory elements of each of the *N* × *M* memory systems may for instance be a digital memory element. In that case, each of the *N* × *M* cells further includes an arithmetic unit, which is connected to each of the *K* memory elements of a respective one of the *N* × *M* memory systems via a respective portion of the selection circuit.

In embodiments, each of the *K* memory elements of each of the *N* × *M* memory systems is designed to store a *P*-bit weights. The input unit is configured to apply said signals so as to bit-serially feed a vector of *N* components to the input lines in *P* cycles, where each of the *N* components corresponds to a *P*-bit input word and *P* g 2. The *N* × *M* cells are configured to perform MAC operations in a bit-serial manner, in *P* cycles. In addition, the hardware device further includes an accumulator circuit, which is configured to accumulate values corresponding to partial, bit-serial product values as obtained at each of the *P* cycles. Moreover, the selection circuit is configured to maintain a same set of *N* × *M* weights as active weights during each of the *P* cycles.

Preferably, the in-memory processing hardware device further comprises a configuration and control logic connected to each of the input unit and the selection circuit, as well as a pre-data processing unit connected to the configuration and control logic, and a post-data processing unit connected in output of the output lines.

According to another aspect, the invention is embodied as a computing system comprising one or more in-memory processing hardware devices such as described above. Preferably, the computing system further comprises: a memory unit and a general-purpose processing unit connected to the memory unit to read data from, and write data to, the memory unit. Each of the in-memory processing hardware devices is configured to read data from, and write data to, the memory unit. The general-purpose processing unit is configured to map a given computing task to vectors and weights for the memory systems of the one or more in-memory processing hardware devices.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 schematically represents a computerized system, in which a user interacts with a server, via a personal computer, in order to offload matrix-vector calculations to dedicated hardware accelerators, as in embodiments of the invention;
FIGS. 2A and 2B schematically represent selected components of a hardware accelerator that is optimized for performing in-memory computing (IMC) matrix-vector multiplications, as involved in embodiments. FIG. 2A depicts a crossbar array structure of the hardware accelerator. FIG. 2B is a diagram showing additional components of the hardware accelerator;
FIG. 3A is a diagram of an IMC array involving columns of arithmetic units (multipliers and adder trees) connected to respective columns of memory elements, where each memory cell includes a memory system of several memory elements. As a whole, the crossbar array structure includes *N* × *M* memory systems capable of storing *K* sets of *N* × *M* weights, as in embodiments;
FIG. 3B schematically depicts a given row of memory cells, as well as portions of a programming circuit and a selection circuit, as involved in embodiments. The depicted portions of the programming circuit and the selection circuit are connected to a single memory cell. Other portions are not shown, for the sake of depiction. In practice, however, the programming circuit and the selection circuit are connected to each memory cell;
FIG. 3C is a simplified circuit schematics of components of a selection circuit, which are connected to a respective memory cell, as involved in embodiments;
FIGS. 4A and 4B show two examples of IMC chip configurations, according to embodiments. In each case, an IMC array is connected to accumulators. FIG. 4A assumes a bit-serial injection of the vector components for matrix-vector multiplications, while FIG. 4B assumes parallel operations;
FIG. 5A is a diagram illustrating how a matrix-matrix multiplication involving large operands (matrices) can be handled by a smaller-size IMC array, whereby an input matrix is decomposed into input vectors, which are themselves partitioned into sub-vectors, to which distinct block matrices are assigned for performing successive matrix-vector multiplications, by locally enabling respective matrix coefficient arrays and accumulating partial results, prior to returning a final result, as in embodiments;
FIG. 5B illustrates a corresponding rotation of the *K* sets of coefficients (weights), after having initially loaded the *K* sets of weights, as in embodiments;
FIG. 6 is a diagram illustrating how matrix coefficients (to be used next) can be prefetched, to accelerate computations, as in embodiments; and
FIG. 7 is a flowchart illustrating high-level steps of a method of performing matrix-matrix multiplications similar to the multiplication illustrated in FIG. 5A, as in embodiments.

The accompanying drawings show simplified representations of devices or parts thereof, as involved in embodiments. Similar or functionally similar elements in the figures have been allocated the same numeral references, unless otherwise indicated.

Computerized devices, systems, methods, and computer program products embodying the present invention will now be described, by way of non-limiting examples.

### DETAILED DESCRIPTION OF EMBODIMENTS OF THE INVENTION

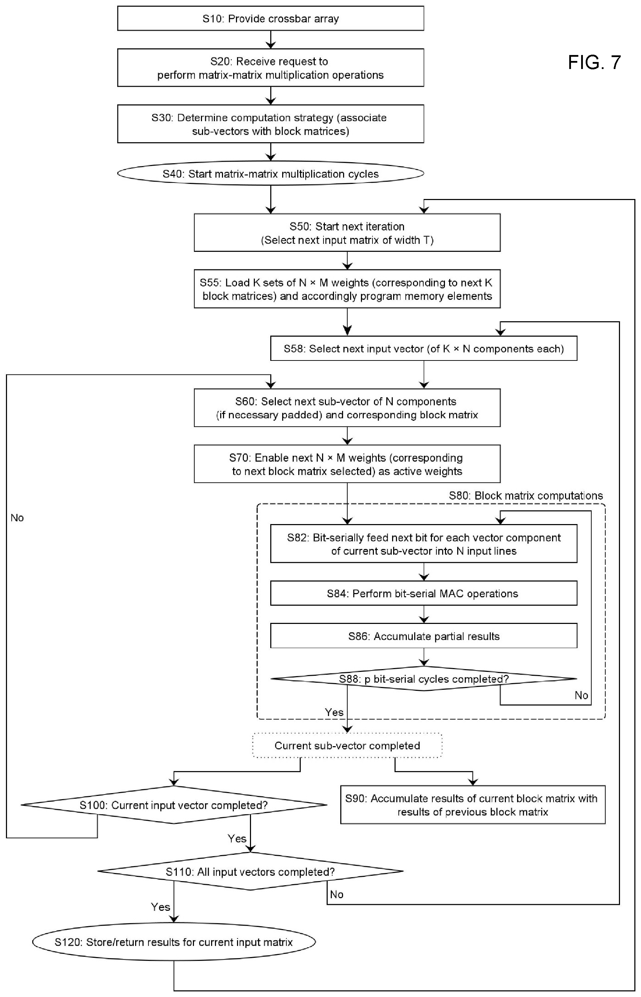

The following description is structured as follows. General embodiments and high-level variants are described in section 1, while section 2 addresses particularly preferred embodiments. Section 3 aggregates final remarks. Note, the present method and its variants are collectively referred to as the <present methods=. All references S*n* refer to methods steps of the flowcharts of FIG. 7, while numeral references pertain to devices, components, and concepts involved in embodiments of the present invention.

### 1. General embodiments and high-level variants

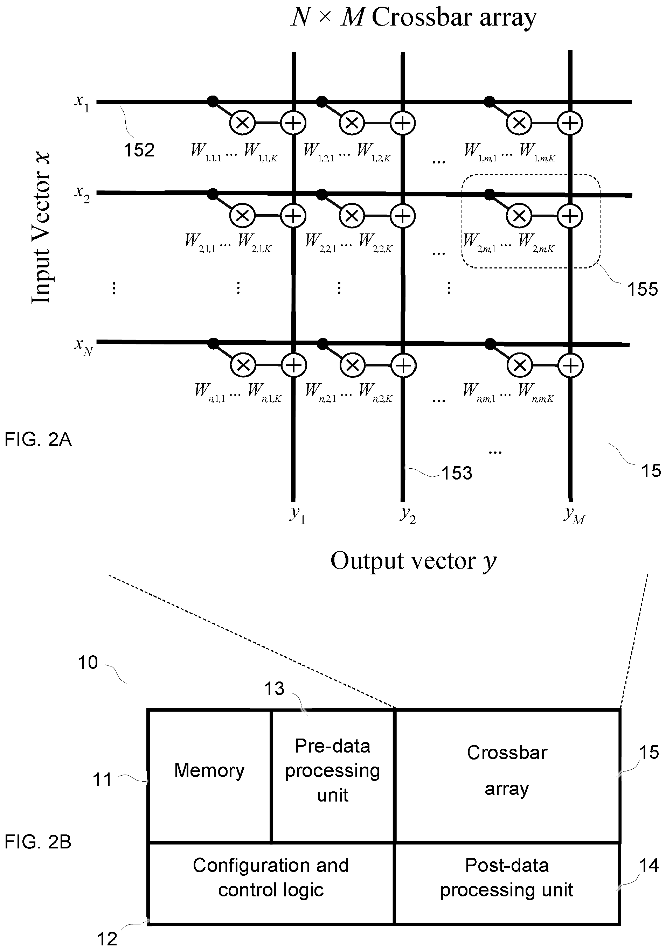

A first aspect of the invention is now described in reference to FIGS. 2A 3 4B, and 7. This aspect concerns a method of in-memory processing, the aim of which is to accelerate multiply-accumulate operations, or MAC operations.

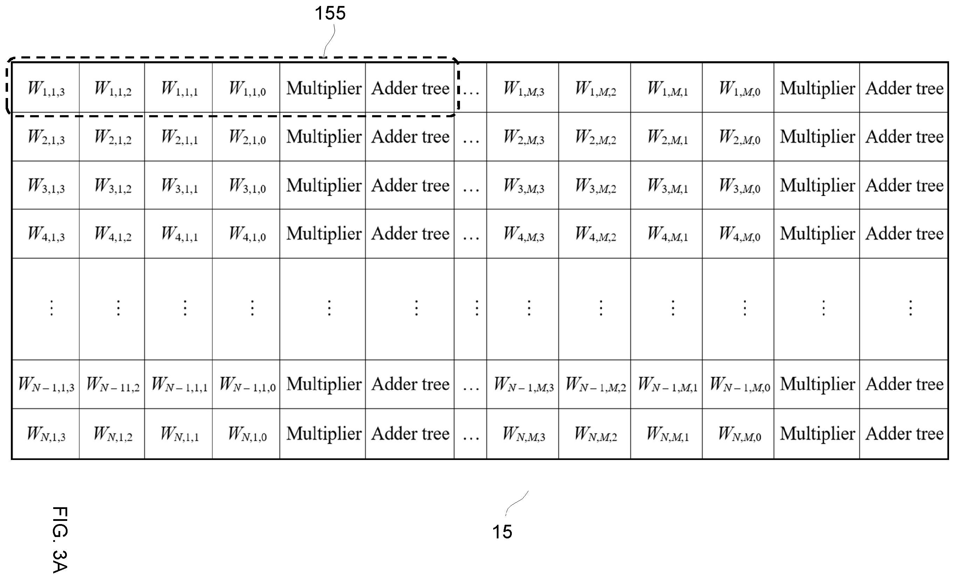

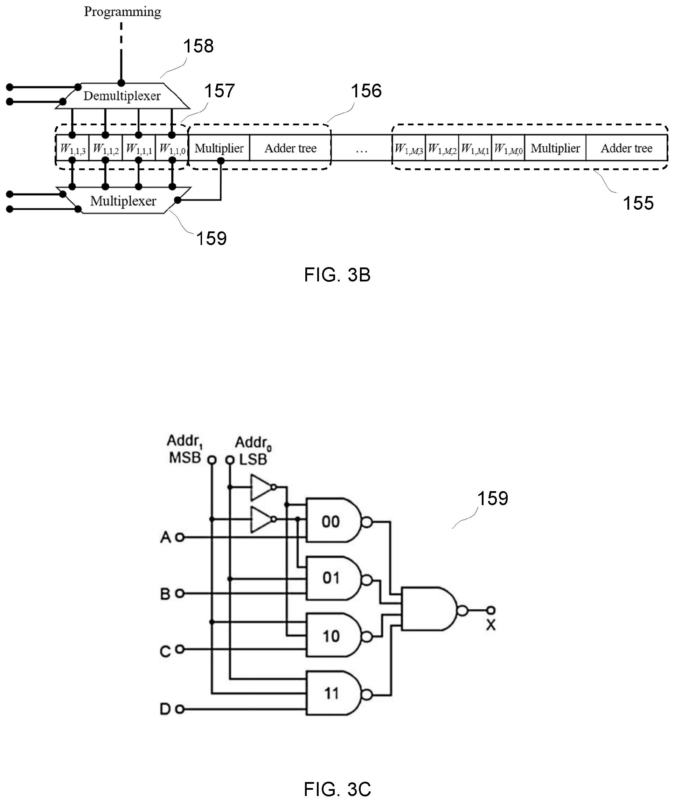

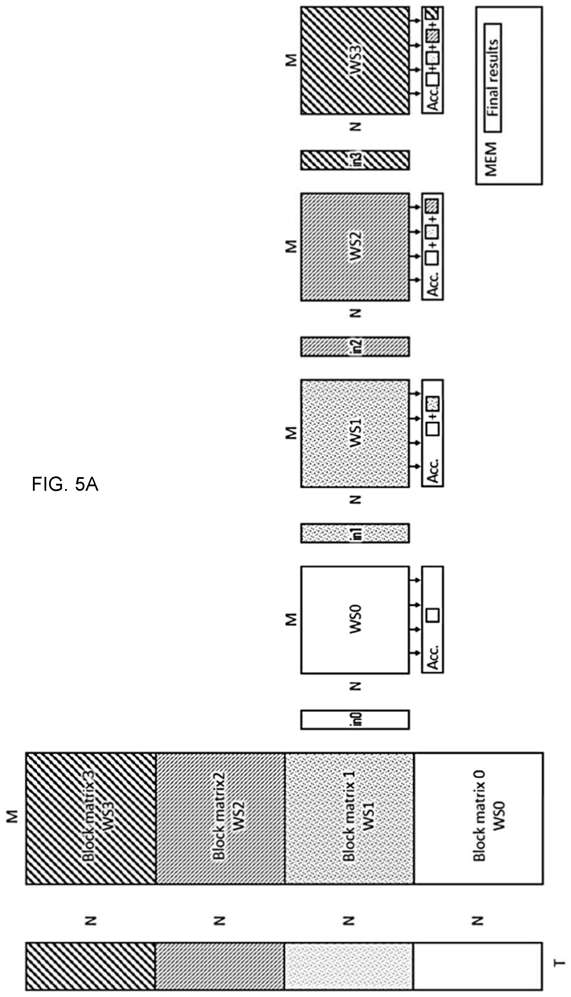

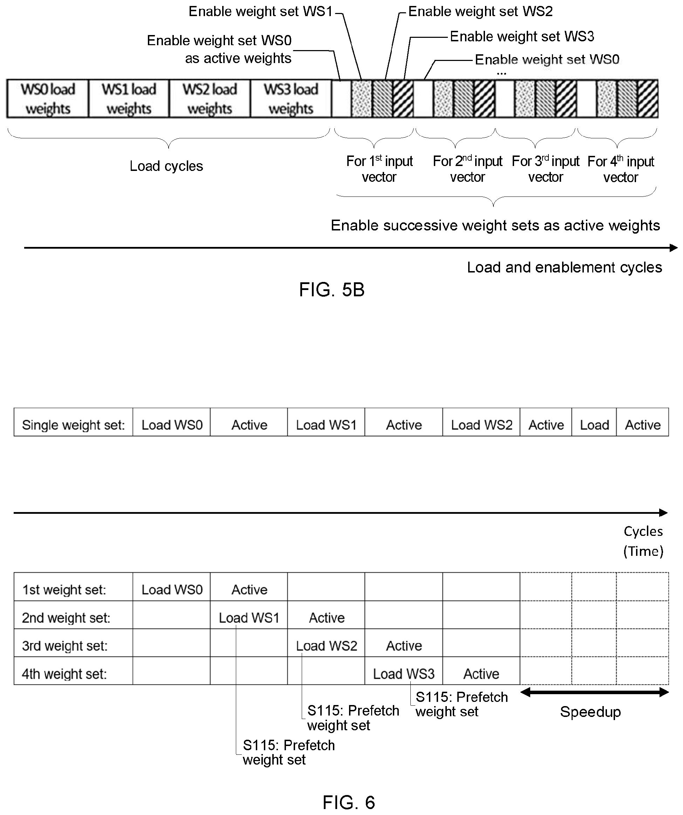

The methods relies on a device 10, 10a having a crossbar array structure 15, 15a. A crossbar array is explicitly shown in FIG. 2A. This structure 15, 15a includes *N* input lines 152 and *M* output lines 153, where *N* g 2 and *M* g 2. The input lines and output lines 152, 153 are interconnected at cross-points (i.e., junctions). The cross-points accordingly define *N* × *M* cells 155. The cells 155 include respective memory systems 157. Remarkably, each memory system 157 is designed to store *K* weights, where *K* g 2. In practice, *K* may typically be equal to 4 (as assumed in FIG. 3A, 3B, and 5A, 5B), 8, 16, or 32. Overall, the crossbar array structure 15 includes *N* × *M* memory systems, which are capable of storing *K* sets of *N* × *M* weights, i.e., *K* × *N* × *M* weights in total.

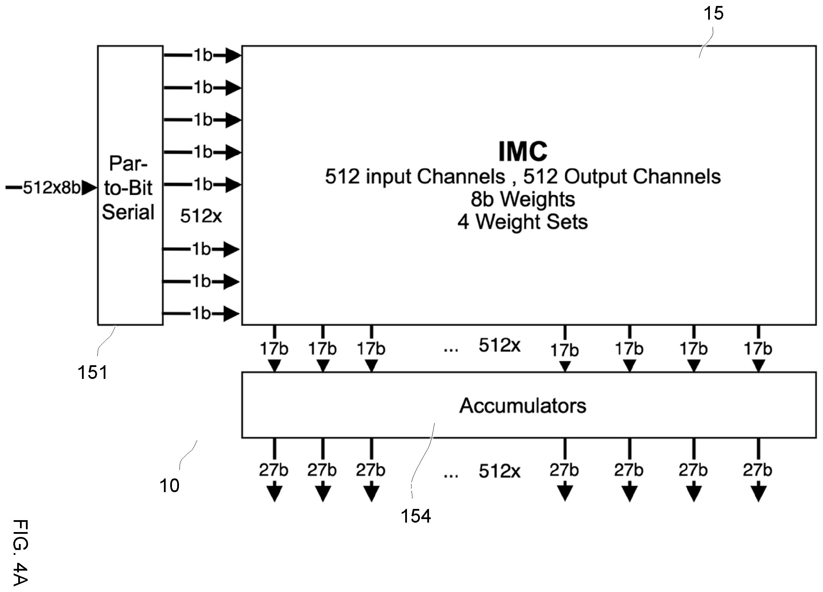

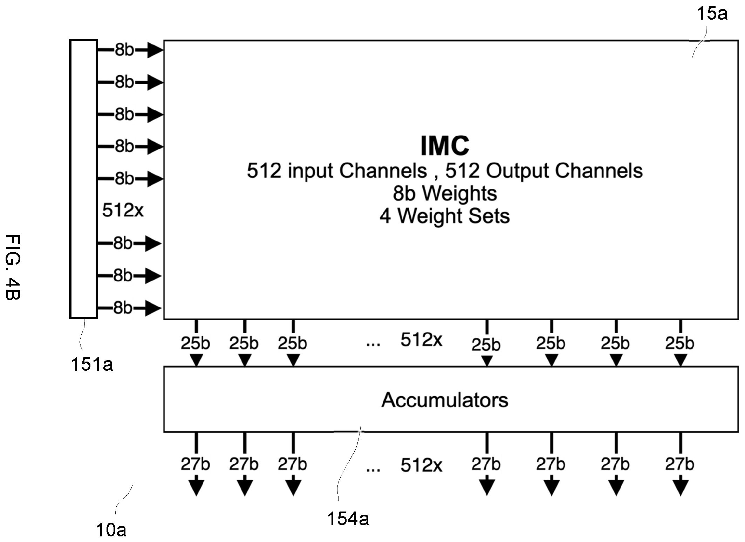

In other words, the crossbar array structure 15 includes *N* × *M* cells 155 in a crossbar configuration, where each cross-point of the cross-bar configuration corresponds to a cell and each cell involves a memory system 157 capable of storing *K* weights. Such weights are noted *W*_{*i*,*j*,*k*} in FIG. 2A, where *i* runs from 1 to *N*, *j* from 1 to *M*, and *k* from 1 to *K*. In practice, the number of input lines 152 and output lines 153 will typically be on the order of several hundreds to thousands of lines. For example, arrays of 256 × 256, 512 × 512 (as in FIGS. 4A and 4B), or 1024 × 1024 may be contemplated, although *N* need not be necessarily equal to *M*. The concept of input lines and output lines is further discussed below.

The proposed method basically revolves around enabling certain weights, prior to performing MAC operations based on given vectors and matrix coefficients corresponding to the enabled weights. That is, *N* × *M* weights are enabled at step S70 (see the flowchart of FIG. 7) for the *N* × *M* cells 155. This is achieved by selecting, for each memory system, a weight from its *K* potential weights and then setting the selected weight as an active weight. Note, the selection and setting of the weights may actually be performed as a single operation, notably when using a selection circuit 159 relying on multiplexers connected to respective memory systems, as in embodiments discussed below in reference to FIG. 3C.

Once a set of weights has been enabled, vector components are injected (step S82) into the crossbar array structure 15. More precisely, signals encoding a vector of *N* components (hereafter referred to as an *N*-vector) are applied S82 to the *N* input lines 152 of the crossbar array structure 15. This causes the crossbar array structure 15 to perform S84 MAC operations based on the *N*-vector and the *N* × *M* active weights as currently enabled. The MAC operations result in that the values encoded by the signals fed into the *N* input lines are respectively multiplied by the currently active weight values, as enabled from the *K* sets of weights stored in the memory systems 157.

As per the crossbar configuration, *M* MAC operations are being performed in parallel, during each calculation cycle. Note, the operations performed at every cell correspond to two scalar operations, i.e., one multiplication and one addition. Thus, the *M* MAC operations imply *N* × *M* multiplications and *N* × *M* additions, meaning 2 × *N* × *M* scalar operations in total.

Output signals obtained in the *M* output lines 153 are subsequently read out at step S90 to obtain corresponding values. In practice, several calculation cycles need often be successively performed, whereby weights are locally enabled (i.e., selected and set as active weights) at each cycle, prior to feeding components of an *N*-vector to perform MAC operations and read the output values. Such output values may correspond to partial values, which may advantageously be accumulated locally, at the device 10, 10a. In that respect, the readout operation performed *in fine* should be understood in a broad sense. The readout operation may not only aim at extracting the output values, but also accumulating them with previous output values (if necessary), and/or storing such values.

Remarkably, the proposed scheme allows distinct sets of weights to be locally enabled at the crossbar array 15, which makes it possible to locally perform rotations of the weights and accordingly reduce the frequency of data exchanges with a memory unit, be it a unit that is external to the device 10, 10a or integrated therein. This, in turn, reduces idle times of the device 10, 10a. That is, some intermediate weight updates are avoided, because up to *K* successive computation cycles can be performed without the need to transfer new sets of weights. Instead, the relevant weight sets are locally enabled as active weights at each calculation cycle. Moreover, the weights may possibly be proactively loaded (i.e., prefetched during the compute cycles), if necessary, to further reduce idle times of the crossbar structure 15. Thus, the proposed approach makes it possible to substantially reduce the frequency of weight data transfers, which results in speeding up computations. And because partial results can be locally accumulated, such results need not be transferred either, which reduces the power consumption of the device 10, 10a.

Comments are in order. Each memory system 157 preferably includes *K* distinct memory elements, for simplicity. Such elements can be connected in such a manner that they can be independently programmed. This allows the weights (to be used next) to be prefetched, as in preferred embodiments discussed below. The memory elements can for instance be programmed to store binary or multi-bit data, similar to synaptic weights of synaptic crossbar array structures.

The weights relate to numerical values and represent matrix coefficients. Such weights capture a (portion of the) problem to be solved and need to be accordingly programmed in the memory systems 157. In that respect, the hardware device 10 may advantageously include a programming circuit 158 (FIG. 3B) configured to program the *N* × *M* memory systems 157, for the latter to store respective sets of *K* weights. The programming circuit may for instance be controlled by a logic unit 12 in the device 10, 10a. In variants, the programming circuit may be external, in which case the device will likely include pads and traces dedicated to the programming of the memory elements.

Programming memory elements of an IMC device is known *per se*. In the present context, however, what is needed is to suitably and timely program several memory elements (or several memory values of the memory system) for each cell. What is further needed is to suitably select the active weights. To that aim, a selection circuit 159 (FIGS. 3B, 3C) can be used to perform the required weight selection and enable the selected weights as active weights.

The vectors (also referred to as *N*-vectors above) used in input have *N* components each, in accordance with the number *N* of input lines. Such vectors may in fact correspond to portions of larger input vectors. That is, the problem to be solved (e.g., a matrix-matrix multiplication) may typically involve large operands. Thus, the initial problem may have to be decomposed into smaller matrix-vector operations, involving portions of input vectors and matrices, partitioned in accordance with the size of the array 15. E.g., an input matrix may be decomposed into input vectors, themselves decomposed into sub-vectors (i.e., the *N*-vectors), which are assigned respective block matrices, with a view to performing multiple operations, the outputs of which can eventually be recomposed to form a final result.

Thus, in practice, the basic operation principle amounts to feeding *N*-vectors into the array 15 to perform matrix-vector operations based, on the one hand, on the vector components fed, and, on the other hand, on the currently active weights, where the latter are judiciously enabled in accordance with the current *N*-vector.

To perform the MAC operations, input signals are applied to the *N* input lines, which signals encode components of the *N*-vectors. I.e., each input signal encodes a distinct vector component and is applied to a respective input line. The input signals correspond to so-called data channels in synaptic crossbar structures. Each vector component and each matrix coefficient can for instance be encoded as a *P*-bit value. I.e., the MAC operations can be implemented in a bit-serial manner (as assumed in FIG. 4A and 7) or in parallel (as in FIG. 4B). In bit-serial implementations, each multiplication operation is performed in *P* bit-serial cycles (e.g., *P* = 8 or 16), as discussed later in detail in reference to preferred embodiments. In variants, each *P*-bit word (a vector component) is injected in parallel to the *M* cells of a corresponding input line.

The present approach is compatible with analogue memory elements and analogue operations. In analogue electrical implementations, digital inputs are transformed through digital-to-analogue converters (DACs) or pulse-width modulators (PWMs) to analogue representations and then applied to the input lines. Each cell operation typically corresponds to a single analogue operation in that case, whereby an input signal is multiplied by a weight value carried by a memory component, as a result of an electrical interaction with that component, and branched in output to a column, effectively resulting to analogue addition operation . A similar principle can be exploited with optical input signals. Digital implementations rely on digital memory systems. I.e., the *N* × *M* memory systems 157 are digital memory systems (e.g., each including *K* digital memory elements). In that case, each of the *N* × *M* cells 155 comprises an arithmetic unit 156 (including a multiplier and an adder tree), connected to a respective memory system 157, as assumed in FIGS. 2A, 3A, and 3B.

Note, for completeness, that an input line 152 refers to a channel through which data are communicated to *M* cells, by way of signals. However, such input lines do not necessarily correspond to the number of physical conductors or logical channels actually needed to reach the cells. In bit-serial implementations, each input line may include a single physical line, which suffices to feed input signals carrying the *N*-vector component data. In parallel data ingestion approaches, however, each input line may include up to *P* parallel conductors, each connected to the *M* cells of the corresponding input line. In such cases, *P* bits are injected in parallel via parallel conductors to each of the *M* corresponding cells. Still, various intermediate configurations can be contemplated, involving both parallel and bit-serial feeding of the data.

The hardware device 10, 10a is preferably manufactured as an integrated structure, e.g., a microchip, integrating all components necessary to perform the core computation steps. Such components may notably include an input unit 151, 151a (FIGS. 4A, 4B) to apply the input signals to the *N* input lines 152, a programming circuit 158 (FIG. 3B), a selection circuit 159 (FIGS. 3B, 3C), and a readout unit 154, 154a (FIGS. 4A, 4B), which may include accumulators. The selection circuit 159 and the input unit 151 may for instance form part of a same configuration and control logic circuit and be controlled by a same logic unit 12 (FIG. 2B), as in embodiments. The device 10, 10a itself concerns another aspect of the invention, which is described later in detail.

Particular embodiments of the present methods are now discussed. To start with, the weights can be proactively loaded (i.e., prefetched during a compute cycle), if necessary, to further reduce idle times of the crossbar structure. The prefetching mechanism as illustrated in FIG. 6. A tremendous advantage is that the prefetching steps can be (at least partially) hidden through pipelining.

In detail, new weights can be prefetched during a current compute cycle, i.e., while performing MAC operations in accordance with the *N* × *M* weights that are currently enabled as active weights. Up to *q* sets of *N* × *M* weights (i.e., weights to be used next) can be prefetched S115 and stored in the *N* × *M* memory systems 157, in place of *q* sets of *N* × *M* weights that were previously active, where 1 ≤ *q* ≤ *K* - 1.

Note, *K* sets of *N* × *M* weights may initially be loaded in the array, prior to starting cycles of matrix-vector calculations. Thus, the subsequent prefetching steps are typically preformed iteratively. Prefetching weight sets allows a proactive approach, which makes it possible to further speed up computations, as illustrated in FIG. 6.

For example, assume that one or more matrix-matrix multiplications have to be performed. In the example in FIG. 6, four successive and different matrix-matrix multiplications are executed, each using only a single weight set and requiring *T* compute cycles. In this case, it is possible to iteratively load the weight sets to prefetch S115 the weights for the next matrix-matrix, e.g., from an external memory. As another example, a first matrix multiplication uses two weight sets, while a third and fourth matrix multiplications require only one weight set. In that case, the weight sets for the third and fourth matrix multiplication can be prefetched during the time the two weight sets for the first matrix multiplication are being used for computation. Such prefetching strategies can lead to significant speedups, as the weight loading times can be partially hidden through pipelining in that case (as shown in FIG. 6), contrary to prior crossbar array structures that employ only a single weight set.

Note, in that respect, that the cycles shown on top in FIG. 6 corresponds to cycles performed with a usual crossbar array, where each cell stores a single weight value. The loading steps (to load the weights into this array) and the processing steps must be interleaved, such that loading times cannot be hidden through pipelining. On the contrary, in an array storing multiple weight sets, the matrix coefficients can possibly be preloaded into unused memory elements, while other weight sets are currently active. This can lead to a significant additional speedup in processing time compared with systems relying on a single weight set.

Referring to FIGS. 3B, 3C, and 7, the required weights can advantageously be preferably enabled S70 all at once, and almost instantaneously. For example, *N* × *M* weights can be enabled S70 by concomitantly selecting the *k*^{th} weight of the *K* weights of each memory system 157 and setting each weight accordingly selected as a currently active weight, where 1 ≤ *k* ≤ *K*. Depending on the circumstances, the weight selection may be done for the whole the *N* × *M* memory systems 157, or only a subset thereof, e.g., a subarray. For example, where a sub-sized vector of *L* components (*L* < *N*) is to be multiplied by an *L* × *L* matrix, the corresponding weight array can be selected and set, without it being needed to enable to remaining weights, since the remaining components of the sub-sized vector can be set to zero (zero-padding). In all cases, several weights may possibly be concomitantly selected and set. As a result, changing context is almost instantaneous. That is, switching from one weight set to another does not introduce any substantial downtime. This can be achieved with a selection circuit involving multiplexers 159, such as depicted in FIGS. 3B and 3C, for example.

In practice, several compute cycles will likely have to be successively performed, as assumed in FIGS. 5A, 5B, and 7. Up to *K* cycles can be successively performed by locally switching weights. That is, the present methods will likely perform S60 3 S100 several matrix-vector calculation cycles, where each cycle comprises: (i) enabling S70 a new set of *N* × *M* active weights; (ii) performing S84 MAC operations based on the enabled weights and an associated *N*-vector; and (iii) reading out S90 output signals obtained in output of the *M* output lines 153 to obtain corresponding values. Each time, a new set of *N* × *M* weights is enabled S70 for the *N* × *M* cells 155 by selecting, for each memory system 157, a weight from its *K* weights and setting the selected weight as an active weight. In order to perform S84 the MAC operations, signals encoding an *N*-vector are applied S82 to the *N* input lines 152 of the crossbar array structure 15, which causes the latter to perform S84 the MAC operations, based on this *N-*vector and the new set of *N* × *M* active weights.

That is, input signals are repeatedly applied to the *N* input lines 152 to successively feed *N-*vectors and cause MAC operations to be accordingly performed. As noted earlier, each *N-*vector may in fact correspond to a portion of a larger input vector (e.g., from a given input matrix), which is assigned a respective block matrix, as illustrated in FIG. 5A. In that case, the *N*-vectors fed into the crossbar array at each matrix-vector calculation cycle differ. In other cases, though, a same *N*-vector may possibly be successively applied several times, this depending on the operation decomposition scheme decided upstream at step S30 (FIG. 7).

In all cases, a new set of active weights may locally be enabled at and for each of the matrix-vector calculation cycles performed, without incurring intermediate programming steps to change the weights. As noted earlier, this may of course be subject to possible prefetching operations, which are nevertheless hidden through pipelining. I.e., *q* sets of *N* × *M* weights may possibly be prefetched S115 and stored (in place of *q* previous weight sets), prior to completing *K* matrix-vector calculation cycles. For example, a single set of *N* × *M* weights may be prefetched at each iteration (*q* = 1). In variants, two sets of *N* × *M* weights may be prefetched after completing every second iterations. Various other prefetching schemes can be contemplated. Note, such prefetching schemes may possibly be adapted dynamically, depending on the workload.

Moreover, for operations involving large operands, the partial results obtained at the end of each intermediate cycle may advantageously be accumulated, locally. That is, after some of the compute cycles, partial product results may be accumulated S90 at the device 10, 10a (in output of the crossbar array structure 15). I.e., accumulations are successively performed, with a view to later recomposing a final result. The final result is obtained based on the successive accumulations. The final results may for instance be returned to an external memory unit 2, upon completing a given number of compute cycles. Interestingly, because new weight values may possibly be prefetched S115 in-between, further matrix-vector calculation cycles can be performed, uninterruptedly, while keeping on accumulating partial results.

Thanks to the partial accumulations, only the final result of the matrix-vector calculation need be transferred and written to the external memory, without incurring idle times due to intermediate transfers of updated weights and partial results. Note, where a matrix-matrix multiplication is performed, the final outcome of each matrix-vector product may possibly be stored locally at the device 10 too. Only the result the matrix-matrix multiplication would then have to be returned to the external memory unit 2. In both cases, some results are locally obtained, based on the successive accumulations, prior to transferring final results to an external entity. The partial results do not need to be transferred to the external entity; they do not even need to be stored and are in fact deleted because of the successive accumulations.

Consider the example of FIG. 5A, in view of the flow of FIG. 7. Here the aim is to perform a matrix-matrix multiplication. This, as noted earlier, can be decomposed into *K* × *T* matrix-vector calculation cycles, where *T* corresponds to the number of columns of one of the input matrices, accordingly decomposed into *T* input vectors. In turn, each input vectors can be decomposed into *K* sub-vectors, i.e., *N*-vectors of *N* components each, where each *N*-vector is associated with a respective block matrices. I.e., each input vector of *K* × *N* components is associated with *K* block matrices, the latter corresponding to *K* sets of *N* × *M* weights. Then, the *K* × *T* matrix-vector calculation cycles can be performed S50 3 S110 as follows. First, *K* sets of *N* × *M* weights (corresponding to the *K* block matrices) need be loaded S55 and accordingly programmed in the memory systems 157, for the latter to store the *K* sets of *N* × *M* weights. Next, calculation cycles are performed for each *N*-vector (i.e., each of the *K* sub-vectors, see steps S60 3 S100) of each of the *T* input vectors (see steps S58 3 S110). That is, the loops pertaining to *N*-vectors are nested in the loops for input vectors, which may themselves be nested in the loops for input matrices (steps S50 3 S120), if necessary.

The most inner loop (pertaining to *N*-vectors) obeys the same principle as recited earlier. Namely, *N* × *M* active weights are enabled S70 as currently active weights, which weights correspond to the block matrix associated with a current *N*-vector, as previously assigned. Then, signals encoding the current *N*-vector are applied S82 to the *N* input lines 152, for the crossbar array structure 15 to perform S84 MAC operations based on this *N*-vector and the currently active weights. The output signals obtained in output of the *M* output lines 153 are then read out to obtain corresponding partial values, which can advantageously be accumulated S90 at the device 10. I.e., the partial values obtained for each *N*-vector (but the very first one) can be locally accumulated S90 with partial values as previously obtained for a previous *N-*vector. This way, updated results are obtained at each cycle. The updated results obtained last are eventually returned S120 to an external memory.

Such operations are visually depicted in FIG. 5A, where *K* is assumed to be equal to 4 in this example. That is, the matrix-matrix multiplication is to be computed in 4 *T* calculation cycles, and each of the *T* input vectors has 4 × *N* components, as seen in FIG. 5A. In addition, the sequence of operations assumes *T* = 4 input vectors in this example. Every block matrix is stored as a single *N* × *M* weight set. The arithmetic units in the IMC array compute a partial dot-product for every pair of *N*-vector and associated weight set. FIG. 5A illustrates how the array switches context (i.e., weight sets) at every calculation cycle and computes the full result locally in an accumulator. Only after the last iteration, the final result is written back to the external memory. That is, the accumulator successively accumulates the 4 partial products and eventually writes the result back to the external memory. This process is repeated *T* times, i.e., once for every input vector.

FIG. 5B illustrates the timing. First all weight sets (WS0 3 WS3) are successively loaded into the IMC, which corresponds to step S55 in FIG. 7. Then, the compute cycles start, in an interleaved fashion. Only four input vectors are involved (*T* = 4), each being decomposed in *K* = 4 sub-vectors of *N* components. The weight sets WS0 3 WS3 are sequentially enabled (i.e., rotated), in accordance with each of the *K* portions of each of the *T* input vectors.

Because the four weight sets available are being used in this example, all the required weight sets can be preloaded S55 in the array 15 beforehand, without requiring any prefetching. That is, the decomposition assumed in the flow of FIG. 7 does, *a priori*, not require prefetching weights, because the matrix-vector operations already exploit rotations of the full *K* weight sets in this example, such that there is no room left (and, in fact, no need) for proactively fetching the next weight sets.

However, prefetching may become advantageous, should the input vectors have to be decomposed in more than *K* portions. Plus, even in the context of FIGS. 5A and 7, new weights may possibly be prefetched while processing the last *K* sub-vectors, corresponding to the very last input vector. I.e., upon completing an operation cycle for any of these *K* sub-vectors, instruction can be given to prefetch a new weight set and write it in place of the *N* × *M* weights that were previously active. This reduces the idle time period (corresponding to step S55), prior to starting S50 computations related to another matrix-matrix multiplication.

Of course, FIGS. 5A and 7 reflect one possible mapping of operations. Various other computational strategies may be contemplated at step S30, leading to different sequences of operations. In addition, it is worth noting that, irrespective of the decomposition scheme adopted at runtime, the core compute device 10 may generally be designed to allow prefetching weights, if needed.

The optimal mapping of operations is determined S30 by an external processing unit 2, 13, i.e., a unit separate from the core compute array 15. Still, this external processing unit 13 may possibly be co-integrated with the core IMC array 15 in the device 10, 10a, as assumed in FIG. 2B. In all cases, a processing unit 2, 13 is used to determine a computation strategy (i.e., identify sub-vectors and block matrices, and associate them), which operation can also be referred to as a conditioning operation. In practice, this operation amounts to mapping S30 a given problem onto a given number of sub-vectors and *K* sets of *N* × *M* weights. This step is performed prior to accordingly programming S55 the *N* × *M* memory systems 157 and encoding the computed vectors into input signals, with a view to subsequently performing the MAC operations. The processing units 2, 13 may possibly execute other tasks, as discussed later.

In embodiments, the MAC operations are performed S84 bit-serially, i.e., in *P* serial cycles, where *P* g 2. In practice, *P* is typically equal to 2*^{r}* , where 3 ≤ *r* ≤ 6. *P* is assumed to be equal to 8 in the example of FIG. 4A. The value *P* corresponds to the bit width of each of the *N-*vectors used in input. Note, partial product values need be locally accumulated S86 in that case, upon completing each of the *P* cycles. The compute cycles S82 3 S88 are sub-cycles that need be distinguished from the matrix-vector calculation cycles (S50 3 S100), which may themselves benefit from partial accumulations S90. I.e., each inner compute cycle S80 includes *P* cycles, whereas the matrix-vector calculation cycles include *K* cycles (themselves nested in *T* cycles).

In variants, the present methods rely on a parallel implementation (see FIG. 4B), which does not require any parallel-to-serial conversion as in FIG. 4A. In parallel implementations, each *N*-vector is processed with weight multiplication in a single cycle. In further variants, hybrid approaches can be contemplated, involving parallel feed of bit-serial values.

Another aspect of the invention concerns a computer program for in-memory processing. The computer program product includes a computer readable storage medium having program instructions embodied therewith, where the program instructions are executable by processing means 12, 13, 14 of an in-memory processing hardware device 10, 10a, to cause the latter to perform steps as described above, starting with MAC operations S84, as well as accumulations S86, S90 and prefetching S115 operations, if necessary. More generally, such processing means 12, 13, 14 take care of some of (or possibly all) pre-processing and post-processing operations, as suggested in FIG. 2B. These operations can for example be executed on an instruction-based processor, or on dedicated accelerators with various instruction or command-based control mechanisms.

Note, apart from operations S30 aiming at determining the computation strategy, the unit 13 may possibly perform other tasks, e.g., related to element-wise or nonlinear operations. For example, in machine learning (ML) applications, the unit 13 may perform feature extraction, to convert some input data (e.g., images, sound files, or text) into vectors, which vectors are subsequently used to train a cognitive model or for inferencing purposes, using the crossbar array structure 15, 15a. In that respect, one or more neuron layers may possibly be mapped onto an array 15, 15a, depending on the partition of the array. Still, the units 12 3 14 may possibly collect outputs from the array, (if necessary) process such outputs, and re-inject them as new inputs to the array, so as to map multiple layers of a deep neural network, for example. that are needed to be performed. ML operations (such as feature extraction) may notably require performing depth-wise convolutions, pooling/un-pooling, etc. Similarly, the post-processing unit 14 may be leveraged to perform affine scaling of the output vectors, apply nonlinear activation functions, etc.

More generally, the units 12 3 14 may perform various operations, these depending on the actual applications. Moreover, such operations may be partly performed at a client device 3 and an intermediate device 2. Various computational strategies can be devised, which may depend on the application.

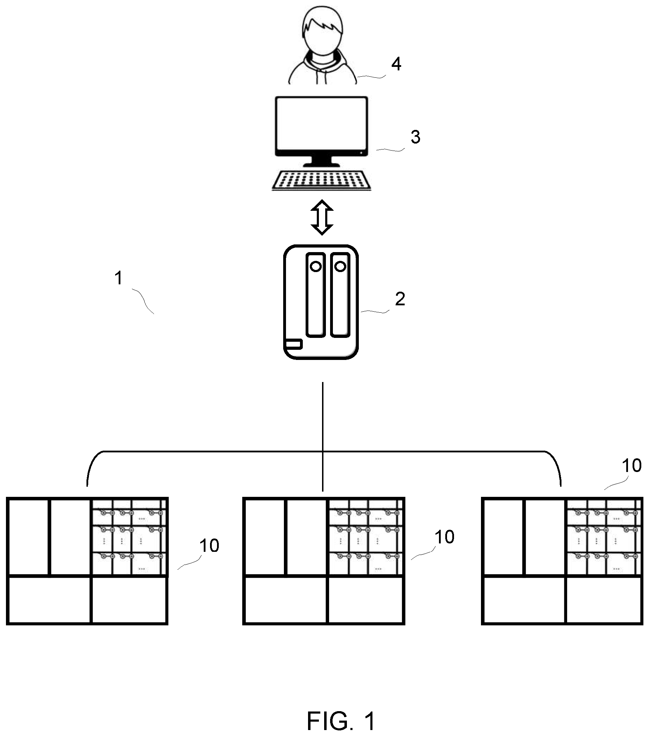

Referring back to FIGS. 1 3 4B, a further aspect of the invention is now described in detail, which concerns an in-memory processing hardware device 10, 10a. Functional and structural features of this device have already been described in reference to the present methods. Such features are only briefly described in the following.

Consistently with the present methods, the device 10, 10a comprises a crossbar array structure 15 such as shown in FIG. 2A. I.e., the array 15 includes *N* input lines 152 and *M* output lines 153, interconnected at cross-points defining *N* × *M* cells 155. Each cell 155 includes a respective memory system 157, each designed to store *K* weights. The array 15 is designed to perform MAC operations.

The device 10, 10a further includes a selection circuit 159, such as shown (partially) in FIG. 3B. The selection circuit 159 is connected to the *N* × *M* memory systems 157. This circuit 159 is generally configured to select a weight from the *K* weights of each memory system and set the selected weight as an active weight. This makes it possible to enable *N* × *M* active weights for the *N* × *M* cells 155.

The device 10, 10a also includes an input unit 151, 151a, which is configured to apply signals encoding *N*-vectors to the *N* input lines 152 of the array 15. This causes the array 15 to perform MAC operations based on an *N*-vector and corresponding *N* × *M* active weights, as enabled by the selection circuit 159, in operation.

In addition, a readout unit 154 is configured to read out output signals obtained in output of the *M* output lines 153 and, if necessary, accumulate partial output values, as discussed earlier. Again, the readout unit should be understood in a broad sense. E.g., it may include accumulators 154, 154a, and/or memory elements storing such output values. In analogue implementations, the readout unit may further include analogue-to-digital converters.

Each of the *N* × *M* memory systems 157 is preferably designed so that its *K* weights are independently programmable. As seen in FIG. 3B, the device 10, 10a may include a programming circuit 158, which is connected to each memory system 157. As said, only a portion of the programming circuit 158 is shown in FIG. 3B, which is a portion connected to a respective memory system. As a whole, the programming circuit 158 is configured to program the *K* weights of each of the *N* × *M* memory systems. Because the *K* weights of every memory systems are independently programmable, any of the *K* weights that is not currently set as an active weight may potentially be (re)programmed even if another one of the *K* weights is currently set as an active weight, which allows weights to be proactively loaded (prefetched), in operation.

That is, the programming circuit 158 may advantageously be configured to prefetch *q* sets of *N* × *M* weights that are not currently set as active weights, and accordingly program the *N* × *M* memory systems 157, for the latter to store the prefetched weights in place of *q* sets of *N* × *M* weights, where 1 ≤ *q* ≤ *K* - 1. Thus, in operation, the programming circuit 158 may program each of the *N* × *M* memory systems 157 to change the weights that are not currently set as active weights, while the crossbar array structure 15 is already performing MAC operations based on weights that are currently active.

Note, the programming circuit 158 must be sufficiently independent of the compute circuit 15, so as to be able to proactively reprogram weights that are currently inactive, while the compute circuit is performing MAC operations based on the currently active weights. This independence makes it possible to proactively load those weights that will be needed for next cycles of operations. Prefetching operations may for instance be performed for several sets of weights at a time. Various prefetching schemes can be contemplated, as noted earlier.

The programming circuit 158 may for instance connect a local memory unit 11 to the configuration and control logic circuit 12, as assumed in FIG. 2B. Although analogue implementations may, in principle, reuse the input lines 152 to program the memory systems 157, a separate programming circuit is preferably provided, so as to be able to reprogram the memory systems 157 during the calculation cycles. Similarly, digital memory cells (i.e., cells comprising digital memory elements) can be connected to dedicated lines, e.g., embodying word lines and bit lines for write operations in SRAM memory devices. Note, contrary to the depiction of FIG. 3B, the selection circuit 159 may possibly re-use the word lines and bit lines for read operations. Thus, the selection circuit and the programming circuit may actually partly overlap.

In the examples of FIG. 3A and 3B, each of the *N* × *M* memory systems 157 includes *K* distinct memory elements, for simplicity. Each memory element is adapted to store a respective weight. In that case, the selection circuit 159 may include *N* × *M* multiplexers. Each multiplexer is connected to all memory elements of a respective memory system 157, as shown in FIG. 3B. In addition, selection control lines are connected to each multiplexer, so as to allow any of the *K* weights of each memory system 157 to be selected and set as an active weight, in operation. Selection bits can be conveyed through control lines to select the active weight, as illustrated in FIG. 3C.

In the example of FIG. 3C, the multiplexer is a channel multiplexer using inverters and logic <NAND= gates to arrive at a common output X. I.e., the combinational logic circuit switches one of several input lines A, B, C, D to a single common output line X. The data lines A, B, C, D correspond to *W*_{1,1,0}, *W*_{1,1,1}, *W*_{1,1,2}, *W*_{1,1,3} in FIG. 3B. The data select lines (carrying the binary input addresses) are defined by Add₀ and Add₁, respectively corresponding to least significant bits (LSB) and most significant bits (MSB). *N* × *M* multiplexers are used to switch the weights of the *N* × *M* memory systems. In principle, there are at most 2 × *N* × *M* control lines, i.e., two control lines per multiplexer 159, to allow individual control of each multiplexer. However, in practice, control lines can be shared across the multiplexers, possibly all multiplexers, especially where one wishes to simultaneously select weights sets, as discussed below. Thus, all control lines are preferably shared, which allows the same index *K* for every element in the *M* × *N* memory system to be simultaneously selected. In such cases, the number of control lines can be reduced to Log₂(*K*) lines.

Similarly, the programming circuit 158 may involve *N* × *M* demultiplexers, where the same control bit lines are used for the whole array 15. Again, a single demultiplexer 158 is shown to be connected to a respective memory system 157 in FIG. 3B, for simplicity. However, in practice, there are *N* × *M* demultiplexers 158 and *N* × *M* multiplexers 159 connected to respective memory systems 157. In variants, the programming circuit 158 and the selection circuit 159 may include other types of electronic components, where such components are arranged in each cell or, at least, connect to each cell, as necessary to program and select the memory values. In further variants, each memory system is configured to store *K* distinct values at respective local addresses, instead of being composed of *K* distinct memory elements.

As noted earlier, the required weights are preferably enabled S70 all at once. To that aim, the selection circuit 159 may advantageously be configured to select a subset (at least) of *n* × *m* weights from one of the *K* sets of *N* × *M* weights. This is most efficiently achieved by concomitantly selecting the *k*^{th} weight of the *K* weights of each memory system of a subset of *n* × *m* memory systems 157, where 2 ≤ *n* ≤ *N*, 2 ≤ *m* ≤ *M*, and 1 ≤ *k* ≤ *K*. As indicated earlier, enabling weights of an *n* × *m* subarray may be advantageous for those matrix-vector calculations where not all the *N* × *M* weights must be switched, which depends on how the problem is initially mapped onto the *N* × *M* cells 155. Note, switching operations may infrequently have to be performed for a single cell (i.e., *n* = 1 and *m* = 1). In practice, however, weight selections mostly come to be performed simultaneously for a large subset of the *N* × *M* memory systems (i.e., *n* > 1 and *m* > 1), or even all of the *N* × *M* memory systems, especially where large operands matrices are involved, as in examples of applications discussed earlier in reference to FIG. 5A, 5B, and 7. In variants, though, the selection circuit 159 may systematically select a set of *N* × *M* weights from one of the *K* sets of *N* × *M* weights, by concomitantly selecting the *k*^{th} weight of the *K* weights of each of the *N* × *M* memory systems, so as to systematically switch all memory systems 157 simultaneously. Thus, in general, the selection circuit 159 is configured to select a set of *n* × *m* weights and set the latter as active weights, for *n* × *m* memory systems of the array 15, where 1 ≤ *n* ≤ *N* and 1 ≤ *m* ≤ *M*.

The device 10, 10a typically includes a sequencer circuit, which is connected to the input unit 151, 151a and the selection circuit 159. The sequencer circuit orchestrates operations of the input unit 151, 151a and the selection circuit 159, so as to successively perform several cycles of matrix-vector calculations as described earlier. I.e., such operations are based on *N*-vectors. Each cycle of matrix-vector calculations involves one or more cycles of MAC operations (depending on whether the MAC operations are performed bit-serially fed or not) and a distinct set of *N* × *M* weights, the latter selected from the *K* sets of *N* × *M* weights and set as *N* × *M* active weights at each cycle. The sequencer circuit, the programming circuit 158, and the input circuit 151, preferably form part of a same configuration and control logic circuit, which typically includes an on-chip logic unit 12, as assumed in FIG. 2B. That is, the sequencer function is preferably performed by the logic unit 12, just like other configuration and control functions.

In addition, the device 10, 10a may include an accumulator circuit 154, 154a, which is configured to accumulate partial product values obtained upon completing each matrix-vector calculation. Again, in bit-serial applications, each cycle of matrix-vector calculation involves several MAC cycles S80, due to the bit-serial operations, as in embodiments discussed earlier in reference to FIG. 7. There, additional accumulations S86 have to be performed. In variants relying on parallel implementations (not requiring parallel-to-serial conversion 151a), the full input is executed with weight multiplication in a single cycle. In all cases, the active weights remain the same during each matrix-vector calculation cycle.

As seen in FIGS. 4A and 4B, the accumulator circuit 154, 154a can be arranged in output of the output lines 153. Accumulators are known *per se*. The accumulator circuit 154, 154a may notably form part of a readout unit (not shown). In variants, accumulators may possibly be arranged in each cell, notably to accumulate S86 values obtained during bit-serial operations at the level of each cell.

As said, each of the *N* × *M* memory systems 157 preferably includes *K* distinct memory elements, for simplicity. Each memory element is adapted to store a respective weight. Such memory elements can notably be digital memory elements, such as static random-access memory (SRAM) devices. In variants, the memory elements are analogue memory elements. In that case, each multiply-accumulate operation, i.e., Σ*ᵢ W*_{*i*,*j*,}*ₖ xᵢ*, is performed analogically and the output signals are translated to the digital domain (if necessary) using analogue-digital converter (ADC) circuitry. The memory elements may optionally be non-volatile memory elements. More generally, the present invention is compatible with various types of electronic memory devices (e.g., SRAM devices, flash cells, memristive devices, etc.). Any type of memristive devices can be contemplated, such as phase-change memory cells, resistive random-access memory (RRAM), as well as electro-chemical random-access memory (ECRAM) devices.

In preferred embodiments, though, each of the *K* memory elements is a digital memory element such as an SRAM device. In that case, each cells 155 further includes an arithmetic unit 156 (including a multiplier and adder tree), which is connected to each of the *K* memory elements of a respective memory system 157 via a respective selection circuit portion 159 (e.g., via a multiplexer). Note, each cell is physically connected to each memory element via a selection circuit component (such as a multiplexer or any other selection circuit component) but is logically connected to only one such element at a time, by virtue of the selection made by the selection circuit.

In bit-serial implementations (FIG. 4A), each memory element is designed to store a *P*-bit weights. The input unit 151 is configured to apply input signals, so as to feed components of the *N*-vectors bit-serially to the input lines 152 in *P* cycles (*P* g 2); each vector component corresponds to a *P*-bit input word. The *N* × *M* cells 155 must then be designed to perform S80 MAC operations in a bit-serial manner (i.e., in *P* cycles). Thus, the hardware device 10 must include an accumulator circuit 154 to accumulate values corresponding to partial, bit-serial product values as obtained at each of the *P* cycles, this corresponding to step S86 in FIG. 7. Meanwhile, the selection circuit 159 must maintain a same set of *N* × *M* weights as active weights during each of the *P* cycles.

As an example of implementation, assume that: (i) the crossbar array is an *N* × *M* = 512 *×* 512 array; (ii) *K* = 4, such that 4 switchable sets of *N* × *M* weights are available in total; and (iii) the input-sample bit-width (IBW) is equal to *P* = 8 bits, such that the weight bit-width (WBW) is equal to 8 bits too, as in FIG. 4A. The IMC device 10 takes in an *N*-vector of 512 components (each component corresponds to an 8-bit input words). Each vector component is fed bit-serially in *P* = 8 cycles. The IMC device 10 maps 512 *×* 512 *×* 4 weights (of 8-bit each) in total. Only one of the weight sets is active for processing during every cycle of the *P* cycles S80. As noted earlier, the bit-serial cycles S80 should not be confused with the matrix-vector calculation cycles (S60 3 S100). At every cycle S80, all *N* input bits (one per row) are multiplied with *M* weights (one per column). The partial products obtained can be stored as a 17-bit value (as WBW + Log₂(*N*) = 17), which is accumulated over IBW = 8 cycles in the accumulator 154 below the IMC 15 to eventually generate (S88: Yes) the full vector product, i.e., the final result for this calculation cycle S80.

Moreover, the arithmetic units in the IMC array compute a partial dot-product for every pair of *N*-vector and associated block matrix. The accumulator 154 may further be used to accumulate S90 the *K* partial products, prior to writing the final result back to an external memory. The IMC switches context (weight set) at every matrix-vector calculation cycle. This process can be repeated for every input vector. For example, a programmable accumulator can be programmed to accumulate several intermediate output values, e.g., as obtained after a shift and invert operation. Thus, if an 8-bit, bit-serial IMC implementation is used with *K* weight sets, then the accumulators 154 may internally accumulate *K* × 8 (17-bit) values that are appropriately shifted depending on the iteration of the bit-serial sequence. If *P* = 8, *K* = 4 and *N* = 512, the final bit-width of the output accumulator is 27 bit. The 27 bit are computed as follows: in each iteration of the bit-serial process, 512 8-bit multiplied values are accumulated, which requires 17 bit to represent. The 17-bit values are shifted and accumulated in 8 cycles, where the resultant value requires 25 bits in order to be fully represented. The accumulator can repeat this cycle for *K* = 4 different weight sets, eventually requiring 27 bits to represent the final result.

In general, the parameters *N*, *M*, *P*, and *K*, can take various possible values. The values indicated above are just examples. In variants relying on parallel implementations, such as illustrated in FIG. 4B, no parallel-to-serial conversion is needed. Rather, the vector components are fed, via an input unit 151a, in parallel, to each of the *M* cells of the corresponding input line 152. The full input is executed (with weight multiplication) in a single cycle. The accumulator 154a is used to accumulate S90 partial products resulting from the current *N*-vector and the associated matrix block. No intermediate accumulation is needed in that case for the MAC operations.

Whether based on bit-serial or parallel implantations, the hardware device 10, 10a may integrate a configuration and control logic 12, which is connected to each of the input unit 151, 151a and the selection circuit 159, as in FIG. 2B. In addition, a pre-data processing unit 13 may be connected to the configuration and control logic 12 (so as to suitably partition the problem into *N*-vectors and block matrices and instruct operations). For completeness, a post-data processing unit 14 may be connected in output of the output lines 153, e.g., in output of the accumulators 154, 154a, so as to suitably re-arrange output data, if necessary, and instruct to store them in a local or nearby memory (e.g., memory 11) or return them to an external entity 2, see FIG. 1.

In that respect, another aspect of the invention concerns a computing system 1. The system 1 may notably include one or more in-memory processing hardware devices 10, 10a, such as described above. The computing system may for example have a client-server configuration, as assumed in FIG. 1. I.e., a user 4 may interact (via a personal device 3) with a server 2, with a view to performing computations. The latter may notably require substantial matrix-matrix or matrix-vector multiplications to be performed, in which case the server 2 may decide to offload such computations to hardware devices 10, 10a, acting as accelerators.

The server 2 may be regarded as aggregating an external memory unit with an external, general-purpose processing unit 2, where the latter is connected to the former, so as to read data from and write data to the memory unit 2, in operation. In addition, each of the in-memory processing hardware devices 10, 10a may be set in data communication with the server 2, so as to be able to read data from and write data back to the memory unit 2, as necessary to handle compute tasks forwarded by the server 2. Note, the general-purpose processing unit may possibly be configured to map the initial computing task (the problem to be solved) onto *N*-vectors and corresponding block matrices.

Note, the external memory unit and the general-purpose processing unit form part of a same general-purpose computer 2 (i.e., a server) in the example of FIG. 1. However, in principle, the external processing unit and memory unit may possibly be provided in physically distinct machines. In further variants, the system 1 may also be configured as a cloud computing system and possibly use containerization technology. I.e., the present invention may notably be embodied as a cloud computing system or somehow be exploited as part of cloud-based services. The system 1 may further include a composable disaggregated infrastructure, which may notably include hardware devices 10, 10a, along with other hardware acceleration devices, e.g., ASICs and FPGAs. In all cases, data exchanges can be optimized, so as to speed up computations, as explained earlier.

The above embodiments have been succinctly described in reference to the accompanying drawings and may accommodate a number of variants. Several combinations of the above features may be contemplated. Examples are given in the next section.

### 2. Specific embodiments

Particularly preferred embodiments rely on an architecture such as shown in FIGS. 2A, 3A, and 4A, with SRAM memory elements. The area of the IMC chip is well balanced between arithmetic units (multipliers and adder trees) and memory elements, unlike prior crossbar arrays, the area of which is typically dominated by the closely-coupled arithmetic units rather than by the memory elements, which can be much more densely arranged. Apart from a better balance between memory and arithmetic areas, the proposed solution (with multiple weight sets) increases the flexibility of the IMC unit 15, allows mapping larger matrix-vector multiplications natively and prefetching weight sets. Each weight set represents a separate block matrix. The weights sets are nevertheless connected to the same arithmetic units, as seen in FIGS. 3A and 3B.

All the more, the proposed architecture and functionalities also offer higher efficiency (due to less interfacing with external memories, see FIGS. 5A and 5B) and faster runtimes (due to the possibility to prefetch weights for inactive weight sets, FIG. 6). This architecture notably relies on an accumulator circuit, which can accumulate partial products resulting from both the bit-serial cycles and the multiple weight sets. Thus, there is no need to write intermediate results to an external memory. This reduces the amount of read/writes significantly, i.e., from 2 *K* - 1 (where only one weight set can be locally stored) to 1 (where *K* weight sets are locally stored).

As seen in FIG. 7, a typical flow of operations is the following, assuming a bit-serial implementation (reference is further made to FIGS. 2A 3 4A). A device 10 including a crossbar array structure 15 is provided at step S10, e.g., the device 10 is set in data communication with a server 2. At step S20, the server 2 receives a request (from a user 4, who can be a computerized client), which requires performing matrix-matrix multiplications. The computation strategy is determined at step S30, either by processing means of the server 2 or by an embedded processing unit 13. This results in associating *N*-vectors with respective block matrices. The matrix-matrix multiplication cycles are started at step S40. A next iteration starts at step S50, whereby a given input matrix of *T* columns is selected. As a result of the computation strategy, *K* sets of *N* × *M* weights are loaded at step S55. The *K* weight sets correspond to the *K* block matrices to be used sequentially during the calculation cycles. The memory elements are accordingly programmed. The next input vector (of *K* × *N* components) of the current input matrix is selected at step S58 and padded, if necessary. The next sub-vector (i.e., an *N*-vector of *N* components) of this input vector is selected at step S60, together with the corresponding block matrix. At step S70, the corresponding *N* × *M* weights are locally enabled as active weights.

The block matrix computations start at step S80. At step S82, a loop is started, to bit-serially feed the next bits (of the vector components of the current *N*-vector) into the *N* input lines of the array 15. The bit-serial MAC operations are performed at step S84. Partial results are accumulated at step S86. The process repeats (S88: No) until all *P* bit-serial cycles have completed (S88: Yes). The processing of the current *N*-vector is completed upon completion of all *P* bit-serial cycles.

The intermediate matrix-vector product obtained with this *N*-vector is accumulated S90 with previous matrix-vector products, if necessary. I.e., all intermediate matrix-vector products are accumulated but the very first one. Intermediate matrix-vector product calculation cycles (S60 3 S100) are repeated until all sub-vectors have been processed for multiplication by the associated block matrices (S100: Yes). The loop on input vectors (S50 3 S110) repeats for all input vectors. Once all vectors have been processed (S110: Yes), the final result for the current input matrix is returned S120 to the calling entity 2, 13. In variant, this result may be locally stored until all input matrices (S50 3 S120) have been processed. Only then would the results pertaining to all input matrices be returned.

### 3. Final remarks

Computerized devices 10, 10a and systems 1 can be suitably designed for implementing embodiments of the present invention as described herein. In that respect, it can be appreciated that the methods described herein are essentially non-interactive, i.e., automated. Automated parts of such methods can be implemented in hardware only, or as a combination of hardware and software. In exemplary embodiments, automated parts of the methods described herein are implemented in software, as a service or an executable program (e.g., an application), the latter executed by suitable digital processing devices. However, all embodiments described here involve computations performed thanks to crossbar array structures adapted to store multiple weight sets, possibly using prefetching and accumulation capability of the devices 10, 10a.

Still, the methods described herein may typically involve executable programs, scripts, or, more generally, any form of executable instructions, be it to instruct to perform core computations at the devices 10, 10a. The required computer readable program instructions can for instance be downloaded to processing elements from a computer readable storage medium, via a network, for example, the Internet and/or a wireless network.

Aspects of the present invention are described herein notably with reference to a flowchart and block diagrams. It will be understood that each block, or combinations of blocks, of the flowchart and the block diagrams can be implemented thanks to computer readable program instructions. The flowchart and the block diagram in the accompanying drawings illustrate the architecture, functionality, and operation of possible implementations of the devices 10, 10a and, systems 1 involving such devices, methods of operating them, and computer program products, according to various embodiments of the present invention.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, other types of memory elements, selection circuits, and programming circuits can be contemplated.

## Claims

1. A method of in-memory processing, the method comprising:
providing (S10) a crossbar array structure (15) including *N* input lines (152) and *M* output lines (153), which are interconnected at cross-points defining *N* × *M* cells (155), where *N* g 2 and *M* g 2, the cells (155) including respective memory systems (157), each designed to store *K* weights, *K* g 2, whereby the crossbar array structure (15) includes *N* × *M* memory systems storing *K* sets of *N* × *M* weights;
enabling (S70) *N × M* active weights for the *N* × *M* cells (155) by selecting, for each of the memory systems (157), a weight from its *K* weights and setting the selected weight as an active weight;
applying (S82) signals encoding a vector of *N* components to the *N* input lines (152) of the crossbar array structure (15) to cause the latter to perform (S84) multiply-accumulate operations, or MAC operations, based on the vector and the *N × M* active weights; and
reading out (S86, S90) output signals obtained in output of the *M* output lines (153) to obtain corresponding values.

2. The method according to claim **1**, wherein
the method further comprises, while performing MAC operations in accordance with *N × M* weights that are currently enabled as active weights, prefetching (S115) *q* sets of *N × M* weights to be used next and storing the prefetched weights in the *N* × *M* memory systems (157), in place of *q* sets of *N × M* weights that were previously active, where 1 ≤ *q* ≤ *K* - 1.

3. The method according to claim **1** or **2**, wherein
the *N × M* active weights are enabled (S70) by concomitantly selecting the *k*^{th} weight of the *K* weights of each memory system (157) of at least a subset of the *N* × *M* memory systems (157) and setting each weight accordingly selected as a currently active weight, where 1 ≤ *K* ≤ *K*.

4. The method according to any one of claims **1** to **3**, wherein
the method comprises performing (S58 3 S110) several matrix-vector calculation cycles, each of the cycles comprising:
enabling (S70) a new set of *N × M* active weights for the *N* × *M* cells (155) by selecting, for each of the memory systems (157), a weight from its *K* weights and setting the selected weight as an active weight;
applying (S82) signals encoding a vector of *N* components to the *N* input lines (152) of the crossbar array structure (15) to cause the latter to perform (S84) MAC operations, based on the vector and the new set of *N × M* active weights; and
reading out (S86, S90) output signals obtained in output of the *M* output lines (153) to obtain corresponding values, and,
preferably, the method further comprises, at an external processing unit,
mapping (S30) a given problem onto a given number of sub-vectors and *K* sets of *N* × *M* weights, prior to programming (S55) the *N* × *M* memory systems (157) in accordance with the *K* sets of *N* × *M* weights and encoding the sub-vectors into input signals, with a view to applying (S82) such input signals to the *N* input lines (152) to perform the several matrix-vector calculation cycles.

5. The method according to claim **4**, wherein
each of the cycles further comprises accumulating (S90) partial product results corresponding to the output signals read out, whereby accumulations are successively performed, and,
preferably, the method further comprises, upon completing (S110: Yes) the several matrix-vector calculation cycles, returning (S120) results obtained based on the successive accumulations to an external memory unit (2).

6. The method according to claim **5**, wherein
the method further comprises, prior to completing *K* cycles of said several matrix-vector calculation cycles:
prefetching (S115) *q* sets of *N × M* weights and storing the latter in the *N* × *M* memory systems (157), in place of *q* sets of *N × M* previously enabled as active weights, where 1 ≤ *q* ≤ *K* - 1.

7. The method according to claim **6**, wherein
the method comprises performing (S50 3 S110) *K* × *T* matrix-vector calculation cycles, where *T* corresponds to a number of input vectors, wherein each of the input vectors are decomposed into *K* sub-vectors of *N* components and is associated with *K* respective block matrices, the latter corresponding to *K* sets of *N* × *M* weights, whereby the *K* × *T* matrix-vector calculation cycles are performed by:
loading (S55) *K* sets of *N* × *M* weights corresponding to said *K* respective block matrices and accordingly programming the memory systems (157) for them to store the *K* sets of *N* × *M* weights; and
for each (S60) sub-vector of the *K* sub-vectors of each of the *T* input vectors,
enabling (S70) *N × M* active weights corresponding to an associated one of the *K* respective block matrices as currently active weights;
applying (S82) signals encoding a vector corresponding to said each sub-vector to the *N* input lines (152) to cause the crossbar array structure (15) to perform (S84) MAC operations based on said each sub-vector and the currently active weights, and
reading out output signals obtained in output of the *M* output lines (153) to obtain corresponding partial values,
and wherein, preferably,
reading out said output signals comprises accumulating (S90) the partial values obtained for said each sub-vector with partial values as previously obtained for a previous one of the *K* sub-vectors, if any, to obtain updated results, and
the method further comprises returning (S120) results obtained based on the updated results obtained last.

8. The method according to any one of claims **1** to **7**, wherein:
the *N* × *M* memory systems (157) are digital memory systems;
each of the *N* × *M* cells (155) further comprises an arithmetic unit (156) connected to a respective one of the *N* × *M* memory systems (157); and
the MAC operations are preferably performed (S84) bit-serially in *P* cycles, *P* g 2, wherein *P* corresponds to a bit width of each of the *N* components of each of the vectors used in input, whereby partial product values are accumulated (S86) upon completing each of the *P* cycles.

9. A computer program for in-memory processing, the computer program product comprising a computer readable storage medium having program instructions embodied therewith, the program instructions executable by processing means of an in-memory processing hardware device (10) to cause the latter to perform the steps of any one of claims **1** to **8**.

10. An in-memory processing hardware device (10), wherein the device (10) comprises:
a crossbar array structure (15) including *N* input lines (152) and *M* output lines (153), which are interconnected at cross-points defining *N* × *M* cells (155), where *N* g 2 and *M* g 2, the cells (155) including respective memory systems (157), each designed to store *K* weights, *K* g 2, whereby the crossbar array structure includes *N* × *M* memory systems (157) that are adapted to store *K* sets of *N* × *M* weights to perform multiply-accumulate operations, or MAC operations;
a selection circuit (159) connected to the *N* × *M* memory systems (157), the selection circuit (159) configured to select a weight from the *K* weights of each of the memory systems and set the selected weight as an active weight, so as to enable *N × M* active weights for the *N* × *M* cells (155);
an input unit (151) configured to apply signals encoding a vector of *N* components to the *N* input lines (152) of the crossbar array structure (15) to cause the latter to perform MAC operations based on the vector and the *N × M* active weights enabled by the selection circuit (159); and
a readout unit (154) configured to read out output signals obtained in output of the *M* output lines (153),
and wherein, preferably, the in-memory processing hardware device (10) further comprises:
a configuration and control logic (12) connected to each of the input unit (151) and the selection circuit (159);
a pre-data processing unit (13) connected to the configuration and control logic (12);
and
a post-data processing unit (14) connected in output of the output lines (153).

11. The in-memory processing hardware device (10) according to claim **10**, wherein
each of the *N* × *M* memory systems (157) is designed so that its *K* weights are independently programmable; and
the device (10) further includes a programming circuit (158) connected to said each memory system (157), the programming circuit (158) configured to program the *K* weights of the *N* × *M* memory systems.

12. The in-memory processing hardware device (10) according to claim **11**, wherein the programming circuit (158) is further configured to
prefetch *q* sets of *N × M* weights that are not currently set as active weights, and
accordingly program the *N* × *M* memory systems (157), for the latter to store the prefetched weights in place of *q* sets of *N × M* weights, where 1 ≤ *q* ≤ *K* - 1.

13. The in-memory processing hardware device (10) according to any one of claims **10** to **12**, wherein
each of the *N* × *M* memory systems (157) includes *K* memory elements, each adapted to store a respective weight of the *K* weights, and
the selection circuit (159) includes *N* × *M* multiplexers, each connected to each of the *K* memory elements of a respective one of the *N* × *M* memory systems (157), as well as selection control lines, which are connected to each of the multiplexers, so as to allow any one of the *K* weights of each of the memory systems (157) to be selected and set as an active weight, in operation.
and wherein, preferably,
the selection circuit (159) is further configured to select a subset of *n* × *m* weights from one of the *K* sets of *N* × *M* weights, by concomitantly selecting the *k*^{th} weight of the *K* weights of each memory system (157) of a subset of *n* × *m* memory systems (157) of the *N* × *M* memory systems, where 2 ≤ *n* ≤ *N*, 2 ≤ *m* ≤ *M* and 1 ≤ *K* ≤ *K*.

14. The in-memory processing hardware device (10) according to any one of claims **10** to **13**, wherein:
the in-memory processing hardware device (10) further comprises a sequencer circuit and an accumulator circuit (154);
the sequencer circuit is connected to the input unit (151) and the selection circuit (159) to orchestrate operations of the input unit (151) and the selection circuit (159), so as to successively perform several cycles of matrix-vector calculations based on one or more sets of vectors, wherein, in operation, each of the cycles of matrix-vector calculations involves one or more cycles of MAC operations, and a distinct set of *N × M* weights are selected from the *K* sets of *N × M* weights and set as *N × M* active weights at each of the cycles of matrix-vector calculations; and
the accumulator circuit (154) is configured to accumulate partial product values obtained upon completing each MAC operation cycle,
and wherein, preferably,
the accumulator circuit (154) is arranged in output of the output lines (153).

15. The in-memory processing hardware device (10) according to any one of claims **10** to **14**, wherein
each of the *N* × *M* memory systems (157) includes *K* memory elements, each adapted to store a respective weight of the *K* weights,
and wherein, preferably,
each of the *K* memory elements of each of the *N* × *M* memory systems (157) is a digital memory element, and
each of the *N* × *M* cells (155) further includes an arithmetic unit (156), which is connected to each of the *K* memory elements of a respective one of the *N* × *M* memory systems (157) via a respective portion of the selection circuit (159).

16. The in-memory processing hardware device (10) according to claim **15**, wherein
each of the *K* memory elements of each of the *N* × *M* memory systems (157) is designed to store a *P*-bit weights;
the input unit (151) is configured to apply said signals so as to bit-serially feed a vector of *N* components to the input lines (152) in *P* cycles, each of the *N* components corresponding to a *P*-bit input word, where *P* g 2;
the *N* × *M* cells (155) are configured to perform MAC operations in a bit-serial manner in the *P* cycles;
the hardware device (10) further includes an accumulator circuit (154), which is configured to accumulate values corresponding to partial, bit-serial product values as obtained at each of the *P* cycles; and
the selection circuit (159) is configured to maintain a same set of *N* × *M* weights as active weights during each of the *P* cycles.

17. A computing system (1) comprising
one or more in-memory processing hardware devices (10), each according to any one of claims **10** to **16**, wherein, preferably, the computing system further comprises:
a memory unit (2) and a general-purpose processing unit (2) connected to the memory unit to read data from, and write data to, the memory unit (2), wherein
each of the in-memory processing hardware devices (10) is configured to read data from, and write data to, the memory unit (2), and
the general-purpose processing unit (2) is configured to map a given computing task to vectors and weights for memory systems (157) of the one or more in-memory processing hardware devices (10).
